# EUROPÄISCHE PATENTSCHRIFT

(11) **EP 1 568 523 B1**
(45) Veröffentlichungstag und Bekanntmachung des Hinweises auf die Patenterteilung: **13.06.2007**
(21) Anmeldenummer: 04290535.6
(22) Anmeldetag: 26.02.2004
(51) Int. Cl.: B60H 1/00

(54) **Bauanordnung für eine Vorrichtung zum Austausch von Wärme**
Construction of heat exchanging device
Construction d'un dispositif d'échangeur de chaleur

(43) Veröffentlichungstag der Anmeldung: 31.08.2005
(73) Patentinhaber: Behr France Rouffach SAS, 68250 Rouffach (FR)
(72) Erfinder: Tonnelier, Pierre, 68240 Kaysersberg (FR)
(74) Vertreter: Grauel, Andreas

(56) Entgegenhaltungen:
- FR-A- 2 531 666
- FR-A- 2 769 262
- US-A- 3 841 395
- US-A1- 2003 217 833
- US-B1- 6 544 115

## Beschreibung

Die vorliegende Erfindung bezieht sich auf eine Bauordnung für eine Vorrichtung zum Austausch von Wärme, insbesondere für Kraftfahrzeuge. Aus dem Stand der Technik sind derartige Bauanordnungen bekannt: Die Bauanordnungen weisen typischerweise eine Heizeinrichtung für Luft sowie einen Verdampfer auf, um so eine Klimatisierung eines Fahrzeuginnenraums zu gewährleisten. Aus dem Stand der Technik sind Lösungen bekannt, bei denen die durch die einzelnen Bauanordnungen tretende Luft nachfolgend durch sämtliche der einzelnen Einrichtungen, das heißt insbesondere die Heizeinrichtung sowie den Verdampfer, geleitet wird. Obwohl diese Bauanordnungen zufriedenstellend arbeiten, kann die Führung der Luft durch sämtliche Einrichtungen zu Leistungsverlusten führen.

Darüber hinaus werden die Heiz- bzw. Klimatisierungssysteme immer kompakter, was bei den Anordnungen nach dem Stand der Technik dazu führt, dass die Mischzonen immer stärker beeinflusst werden, da die einzelnen Wärmetauschereinrichtungen hintereinander bezüglich der Strömungsrichtung der Luft angeordnet sind. Eine solche Klimaanlage ist in FR 2 531 666 A offenbart. Dieses Dokument gilt als Basis für den Oberbegriff des Anspruch 1.

Der vorliegenden Erfindung liegt daher die Aufgabe zugrunde, eine Bauanordnung für eine Einrichtung zum Austausch von Wärme zu schaffen, die eine gegenüber dem Stand der Technik verbesserte Führung für ein durch diese hindurchtretendes gasförmiges Medium aufweist. Dies wird erfindungsgemäß durch eine Bauanordnung nach Anspruch 1 erreicht. Vorteilhafte Ausführungsformen sind Gegenstand der Unteransprüche. Die erfindungsgemäße Bauanordnung für eine Einrichtung zum Austausch von Wärme weist wenigstens ein Gehäuse, in welchem ein gasförmiges Medium wenigstens teilweise auf einem vorbestimmten Pfad geführt wird, eine Einlasseinrichtung für das gasförmige Medium, wenigstens eine erste Einrichtung zum Austausch von Wärme, wenigstens eine zweite Einrichtung zum Austausch von Wärme, und wenigstens eine erste Regeleinrichtung, die die Strömungsrichtung des gasförmigen Mediums wenigstens abschnittsweise beeinflusst, auf. Die erste Regeleinrichtung kann in wenigstens zwei unterschiedliche Stellungen eingestellt werden. Daneben ist eine Auslasseinrichtung für das gasförmige Medium vorgesehen. Erfindungsgemäß werden in wenigstens einer ersten Stellung der ersten Regeleinrichtung im Wesentlichen keine Anteile des gasförmigen Mediums durch die erste Einrichtung zum Austausch von Wärme geführt.

Der Vorteil der erfindungsgemäßen Einrichtung liegt darin, dass bestimmte Anteile der Luft entweder durch die erste Einrichtung zum Austausch von Wärme, oder durch die zweite Einrichtung zum Austausch von Wärme treten, und nicht hintereinander durch beide Einrichtungen zum Austausch von Wärme. Auf diese Weise können gegenüber dem Stand der Technik, wie oben ausgeführt, Leistungsverluste vermindert werden. Darüber hinaus können durch eine geeignete Anordnung der jeweiligen Auslässe für die Entfrostung und den Fußraum in Verbindung mit der Ausrichtung der Einrichtungen zum Austausch von Wärme Verluste minimiert werden, insbesondere wenn eine hohe Heizleistung für die Füße gewünscht wird.

Bei dem gasförmigen Medium handelt es sich vorzugsweise um die durch die Bauanordnung strömende Luft, die letztlich in den Fahrzeuginnenraum zu dessen Klimatisierung geleitet wird. Im folgenden wird daher anstelle des gasförmigen Mediums auch von Luft die Rede sein.

Unter einer Beeinflussung der Strömungsrichtung der Luft wird verstanden, dass die Strömungsrichtung wenigstens abschnittsweise geändert, das heißt insbesondere die Luft abgelenkt wird.

Bei einer weiteren bevorzugten Ausführungsform der erfindungsgemäßen Bauanordnung werden in einer zweiten Stellung der ersten Regeleinrichtung im Wesentlichen keine Anteile der Luft durch die zweite Einrichtung zum Austausch von Wärme geführt. Dies bedeutet, dass die erste Regeleinrichtung wenigstens in zwei Stellungen gebracht werden kann, wobei in der einen Stellung die Luft im Wesentlichen nur durch eine der Einrichtungen zum Austausch von Wärme tritt, und in einer zweiten Stellung die Luft im Wesentlichen nur die jeweils andere der beiden Einrichtungen zum Austausch von Wärme tritt.

Bevorzugt ist die erste Regeleinrichtung zwischen der ersten Stellung und der zweiten Stellung, bei denen es sich bevorzugt um Extremstellungen handelt, variabel, bevorzugt stufenlos, einstellbar. Dabei gelangen in den einzelnen Zwischenstellungen bestimmte Anteile der Luft durch die erste Einrichtung zum Austausch von Wärme, wohingegen andere Anteile der Luft durch die zweite Einrichtung zum Austausch von Wärme gelangen. Auf diese Weise und durch Einstellung der ersten Regeleinrichtung wird der Anteil durch die beiden Einrichtungen zum Austausch von Wärme derart eingestellt, dass in einer ersten Stellung die gesamte Luft durch die erste Einrichtung zum Austausch von Wärme geführt wird, in der zweiten Stellung im Wesentlichen die Luft vollständig durch die zweite Einrichtung zum Austausch von Wärme geleitet wird, und in den Zwischenstellungen die Anteile auf die jeweiligen Einrichtungen zum Austausch von Wärme aufgeteilt werden, wie beispielsweise 20 % auf die erste Einrichtung zum Austausch von Wärme, und 80 % auf die zweite Einrichtung zum Austausch von Wärme.

In einer weiteren bevorzugten Ausführungsform liegt wenigstens ein Abschnitt der ersten Regeleinrichtung in wenigstens einer Stellung an wenigstens einem Abschnitt der ersten Einrichtung zum Austausch von Wärme an. Dabei handelt es sich bei der ersten Regeleinrichtung bevorzugt um eine luftundurchlässige Klappe. Besonders bevorzugt bedeckt die erste Regeleinrichtung in der ersten Stellung die erste Einrichtung zum Austausch von Wärme im Wesentlichen vollständig. Auf diese Weise wird verhindert, dass Luft durch die erste Einrichtung zum Austausch von Wärme gelangt, und daher erreicht, dass die Luft im Wesentlichen vollständig durch die zweite Einrichtung zum Austausch von Wärme strömt.

In einer weiteren bevorzugten Ausführungsform liegt wenigstens ein Abschnitt der Regeleinrichtung in wenigstens einer Stellung in wenigstens einem Abschnitt des Gehäuses an. Dabei liegt der Abschnitt der Regeleinrichtung derart an dem Gehäuse an, dass die Luft nicht durch die zweite Einrichtung zum Austausch von Wärme treten kann, und somit im Wesentlichen der gesamte Anteil der Luft vollständig durch die erste Einrichtung zum Austausch von Wärme tritt. Bevorzugt liegt im Wesentlichen eine Längskante der ersten Regeleinrichtung vollständig an dem Gehäuse an. Es ist jedoch auch umgekehrt möglich, dass die erste Regeleinrichtung in wenigstens einer Stellung an wenigstens einem Abschnitt der zweiten Einrichtung zum Austausch von Wärme anliegt, und auf diese Weise in dieser Stellung ein Durchgang der Luft durch die zweite Einrichtung zum Austausch von Wärme verhindert wird.

Daneben ist es auch möglich, dass die Regeleinrichtung in der ersten Stellung mit wenigstens einem Abschnitt an der ersten Einrichtung zum Austausch von Wärme anliegt, und in der zweiten Stellung an wenigstens einem Abschnitt der zweiten Einrichtung zum Austausch von Wärme und bevorzugt in der ersten Stellung die erste Einrichtung zum Austausch von Wärme im wesentlichen vollständig bedeckt, während sie in der zweiten Stellung die zweite Einrichtung zum Austausch von Wärme im wesentlichen vollständig bedeckt.

Daneben kann die Regeleinrichtung auch in Form eines Schiebereglers ausgestaltet sein, der jeweils die Menge der Luft, die zu der ersten bzw. der zweiten Einrichtung zum Austausch von Wärme gelangt, steuert und/oder regelt.

Anstelle einer einzelnen Regeleinrichtung können in einer weiteren bevorzugten Ausführungsform auch zwei separate oder mehrere Regeleinrichtungen vorgesehen sein, die jeweils den Luftstrom durch die erste und/oder zweite Einrichtung zum Austausch von Wärme steuern und/oder regeln. So kann eine Regeleinrichtung nur den Luftstrom durch die erste Einrichtung zum Austausch von Wärme regeln, wohingegen eine weitere Regeleinrichtung im Wesentlichen nur den Luftstrom durch die zweite Einrichtung zum Austausch von Wärme regelt.

Daneben können die Geräuschpegel reduziert werden, was gleichermaßen mit der Abnahme der Leistungsverluste zusammenhängt. Ferner kann durch die erfindungsgemäße Bauanordnung die Effizienz der Enteisung, insbesondere aber nicht ausschließlich der Frontscheibe erhöht werden. Es wird jedoch darauf hingewiesen, dass nicht sämtliche der genannten Vorteile notwendigerweise durch dieselbe Ausführungsform erreicht werden.

In einer weiteren bevorzugten Ausführungsform ist die erste Einrichtung zum Austausch von Wärme über der zweiten Einrichtung zum Austausch von Wärme angeordnet. Dies bringt den Vorteil mit sich, dass die in Strömungsrichtung der Luft nach den Einrichtungen zum Austausch von Wärme stromabwärts liegenden Mischzonen bzw. die Effizienz der in diesen Zonen auftretenden Mischung der Luft verbessert wird.

In einer weiteren bevorzugten Ausführungsform ist die erste Regeleinrichtung in einem ersten Teilraum des Gehäuses untergebracht, wobei der erste Teilraum des Gehäuses in Strömungsrichtung der Luft vor der ersten und zweiten Einrichtung zum Austausch von Wärme angeordnet ist. Durch diese Anordnung der ersten Regeleinrichtung innerhalb des Gehäuses wird gewährleistet, dass die Anteile der Luft, die durch die jeweils erste und zweite Einrichtung zum Austausch von Wärme treten, bereits in Strömungsrichtung vor den jeweiligen Einrichtungen zum Austausch von Wärme gesteuert und/oder geregelt werden können.

Bevorzugt ist ein zweiter Teilraum des Gehäuses vorgesehen, der in Strömungsrichtung der Luft nach der ersten und zweiten Einrichtung zum Austausch von Wärme angeordnet ist. Dabei handelt es sich bevorzugt um einen Mischraum, in den die jeweiligen Anteile der Luft, die durch die erste oder zweite Einrichtung zum Austausch von Wärme hindurchgetreten sind, miteinander vermischt werden, um so die vom Benutzer gewünschte Misch- bzw. Solltemperatur einzustellen.

Dazu findet in dem zweiten Teilraum wenigstens eine teilweise Durchmischung des durch die erste und die zweite Einrichtung zum Austausch von Wärme hindurchtretenden gasförmigen Mediums statt. Bevorzugt wird die durch die beiden Einrichtungen zum Austausch von Wärme hindurchtretende Luft, das heißt die Anteile der durchtretenden Luft im Wesentlichen vollständig vermischt, um auf diese Weise möglichst effizient die gewünschte Temperatur der letztlich in den Fahrzeuginnenraum geleiteten Luft einstellen zu können.

In einer weiteren bevorzugten Ausführungsform ist in dem zweiten Teilraum wenigstens eine Lenkeinrichtung für das gasförmige Medium vorgesehen. Bei dieser Lenkeinrichtung handelt es sich gegenüber der ersten Regeleinrichtung um eine ortsfeste Einrichtung, die die Strömungsrichtung der Luft wenigstens abschnittsweise ändert.

In einer weiteren bevorzugten Ausführungsform sind die erste und die zweite Einrichtung zum Austausch von Wärme im Wesentlichen parallel zueinander angeordnet. Dies bedeutet, dass eine Hauptausdehnungsrichtung der ersten Einrichtung zum Austausch von Wärme im Wesentlichen parallel zu einer Hauptausdehnungsrichtung der zweiten Einrichtung zum Austausch von Wärme verläuft.

Bei einer weiteren bevorzugten Ausführungsform weist wenigstens eine Einrichtung zum Austausch von Wärme eine vorgegebene Länge und einer dieser Länge gegenüber erheblich verminderte Breite und Tiefe auf. Durch diese Ausgestaltung wird erreicht, dass die beiden Einrichtungen zum Austausch von Wärme innerhalb des Gehäuses übereinander angeordnet werden können, ohne dass dafür der Bauraum erheblich vergrößert werden müsste.

Bevorzugt weist wenigstens eine Einrichtung zum Austausch von Wärme eine Vielzahl von Durchflusseinrichtungen für ein Kältemittel auf. Dabei handelt es sich bei dem Kältemittel beispielsweise um Wasser aus dem Kühlkreislauf des Fahrzeugs oder um das in einem Verdampfer verwendete Kältemittel zum Abkühlen der Luft. Bevorzugt weisen die einzelnen Durchflusseinrichtungen eine Länge auf, die zwischen 200 mm und 900 mm, bevorzugt zwischen 300 mm und 800 mm, und besonders bevorzugt zwischen 400 mm und 600 mm liegt. Diese Längen sind im Vergleich zur Tiefe und Breite der Einrichtung zum Austausch von Wärme deutlich größer als die im Stand der Technik verwendeten Längen der Durchflussrohre. Durch diese erhöhte Länge kann, wie oben dargestellt, erreicht werden, dass die einzelnen Einrichtungen zum Austausch von Wärme übereinander angeordnet werden können.

In einer weiteren bevorzugten Ausführungsform ist eine dritte Einrichtung zum Austausch von Wärme vorgesehen. Bei dieser dritten Einrichtung zum Austausch von Wärme handelt es sich bevorzugt um eine Heizeinrichtung, die aus einer Gruppe von Heizeinrichtungen ausgewählt ist, die CO₂-Wärmepumpen, abgaswärmenutzende Heizungen, Brennstoffheizungen, Standheizungen, elektrische Heizungen und dergleichen enthält. Diese dritte Einrichtung zum Austausch von Wärme dient insbesondere dazu, ein Fahrzeug direkt nach dem Start, wenn noch keine Kühlwasserwärme zur Verfügung steht, zu heizen oder zumindest die Frontscheibe des Fahrzeugs enteisen zu können.

In einer bevorzugten Ausführungsform weist die dritte Einrichtung zum Austausch von Wärme eine gegenüber derjenigen der ersten Einrichtung zum Austausch von Wärme verminderte Querschnittsfläche auf. Bevorzugt handelt es sich bei der ersten Einrichtung zum Austausch von Wärme ebenfalls um eine Heizeinrichtung, besonders bevorzugt um eine solche Heizeinrichtung, die zur Beheizung der Luft die Wärme des Wassers aus dem Kühlkreislauf des Kraftfahrzeugs nutzt.

In einer bevorzugten Ausführungsform ist die dritte Einrichtung zum Austausch von Wärme in Strömungsrichtung der Luft hinter der ersten Einrichtung zum Austausch von Wärme angeordnet. Sowohl bei der ersten als auch bei der dritten Einrichtung zum Austausch von Wärme handelt es sich in diesen Ausführungsbeispielen um Heizeinrichtungen, so dass-diese Hintereinanderanordnung in besonders effizienter Weise eine Beheizung der Luft, insbesondere in den Zeiträumen, in denen die erste Heizeinrichtung bereits eine gewisse, jedoch noch nicht die volle Aufwärmung der Luft erreichen kann, gewährleistet wird.

In einer weiteren bevorzugten Ausführungsform ist eine Vielzahl von Auslasseinrichtungen für das gasförmige Medium vorgesehen. Diese Vielzahl von Auslasseinrichtungen dienen zur Temperierung unterschiedlicher Bereiche im Kraftfahrzeuginnenraum, wie beispielsweise des vorderen und des hinteren Fußraums, des Fondsbereiches, des Frontbereiches, der Enteisung der Windschutzscheibe und dergleichen. Die Auslasseinrichtungen weisen geometrische Querschnitte auf, welche aus Gruppen von Querschnitten ausgewählt sind, die kreisförmig, polygonartig, insbesondere rechteckig, ellipsenförmig sowie Mischformen hieraus aufweisen. In einer besonders bevorzugten Ausführungsform weisen die Auslässe eine im Wesentlichen rechteckige Gestalt auf, wodurch eine weitere Reduzierung des Geräuschpegels erreicht wird. Daneben ist die Herstellung im Falle rechteckiger Querschnitte kostengünstig.

In einer weiteren bevorzugten Ausführungsform weist wenigstens eine Auslasseinrichtung eine zweite Regeleinrichtung für die austretende Luft auf. Auf diese Weise kann die Menge des durch die entsprechende Auslasseinrichtung tretende Luft reguliert werden, und so wird eine separate Steuerung und/oder Regelung, der in die einzelnen Bereiche des Kraftfahrzeuginnenraums gelangenden Luft bzw. deren Menge möglich.

In einer weiteren bevorzugten Ausführungsform weist die Bauanordnung eine Gebläseeinrichtung auf. Diese Gebläseeinrichtung dient dazu, beispielsweise bei Stillstand des Fahrzeuges oder bei geringen Geschwindigkeiten die Luft in einer vorgegebenen Geschwindigkeit durch die Bauanordnung zu fördern.

Weitere Vorteile der erfindungsgemäßen Einrichtung ergeben sich aus den beigefügten Zeichnungen. Darin zeigen:
- Fig. 1: eine schematische Darstellung der erfindungsgemäßen Bauanordnung für eine Vorrichtung zum Austausch von Wärme;
- Fig. 2: eine erfindungsgemäße Bauanordnung für eine Vorrichtung zum Austausch von Wärme in einer ersten Ausführungsform;
- Fig. 2a: eine erfindungsgemäße Bauanordnung für eine Vorrichtung zum Austausch von Wärme in einer weiteren Ausführungsform;
- Fig. 3: eine erfindungsgemäße Bauanordnung für eine Vorrichtung zum Austausch von Wärme in einer weiteren Ausführungsform;
- Fig. 4: eine erfindungsgemäße Bauanordnung für eine Vorrichtung zum Austausch von Wärme in einer weiteren Ausführungsform;
- Fig. 5a: eine zweite Einrichtung zum Austausch von Wärme für die erfindungsgemäße Bauanordnung;
- Fig. 5b: eine erste Einrichtung zum Austausch von Wärme für die erfindungsgemäße Bauanordnung;
- Fig. 5c: eine Einrichtung zum Austausch von Wärme nach dem Stand der Technik;
- Fig. 6a: eine zweite Einrichtung zum Austausch von Wärme für die erfindungsgemäße Bauanordnung nach dem Stand der Technik in einer weiteren Ausführungsform;
- Fig. 6b: eine zweite Einrichtung zum Austausch von Wärme für die erfindungsgemäße Bauanordnung nach dem Stand der Technik in einer weiteren Ausführungsform.

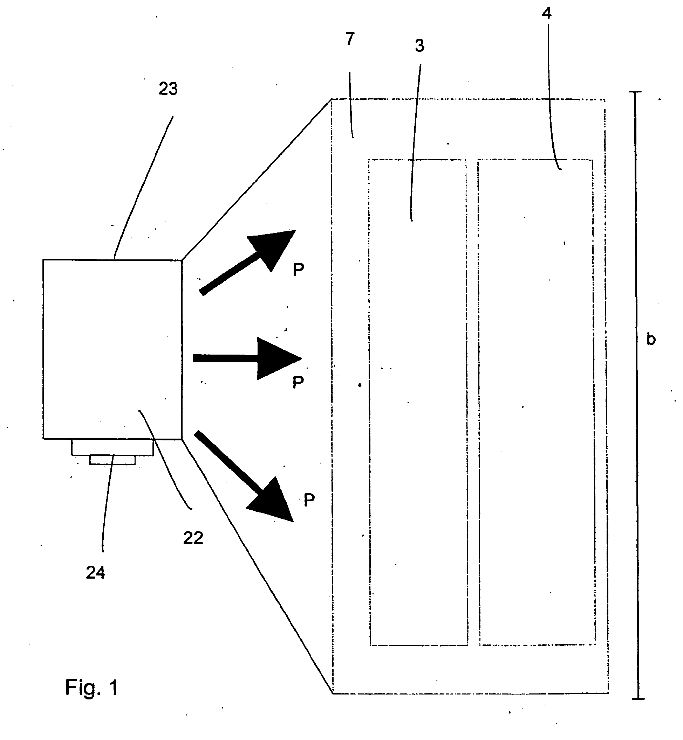

Fig. 1 zeigt schematisch die erfindungsgemäße Bauanordnung für eine Einrichtung zum Austausch von Wärme. Dabei bezieht sich Bezugszeichen 7 auf ein Gehäuse, in welchem eine erste Einrichtung 3 zum Austausch von Wärme und eine zweite Einrichtung 4 zum Austausch von Wärme angeordnet sind. Bei dieser Ausführungsform handelt es sich bei der Einrichtung 3 zum Austausch von Wärme um eine Heizeinrichtung und bei Einrichtung 4 zum Austausch von Wärme um einen Verdampfer. Über einen Einlass 23 wird der Bauanordnung Luft zugeführt und durch einen Lüfter 22, der einen Motor 24 aufweist in Richtung der Pfeile P, die den Luftstrom anzeigen, beschleunigt. Innerhalb des Gehäuses 7 sind Regeleinrichtungen (nicht gezeigt) derart angeordnet, dass der Luftstrom entweder durch die Einrichtung 3 zum Austausch von Wärme oder die Einrichtung 4 zum Austausch von Wärme geführt wird und schließlich durch (nicht gezeigte) Auslässe in den Fahrzeuginnenraum gelangt. Dabei durchströmt die Luft nicht hintereinander die beiden Einrichtungen zum Austausch von Wärme, sondern bestimmte Anteile der Luft treten entweder durch die erste Einrichtung 3 oder die zweite Einrichtung 4 zum Austausch von Wärme hindurch.

Dabei tritt der Luftstrom entlang im wesentlichen der gesamten Breite b in das Gehäuse der Vorrichtung ein. Es ist jedoch auch möglich, den Lufteintritt in das Gehäuse so zu gestalten, dass die Luft nur auf einem Abschnitt entlang der Breite b in das Gehäuse eintritt.

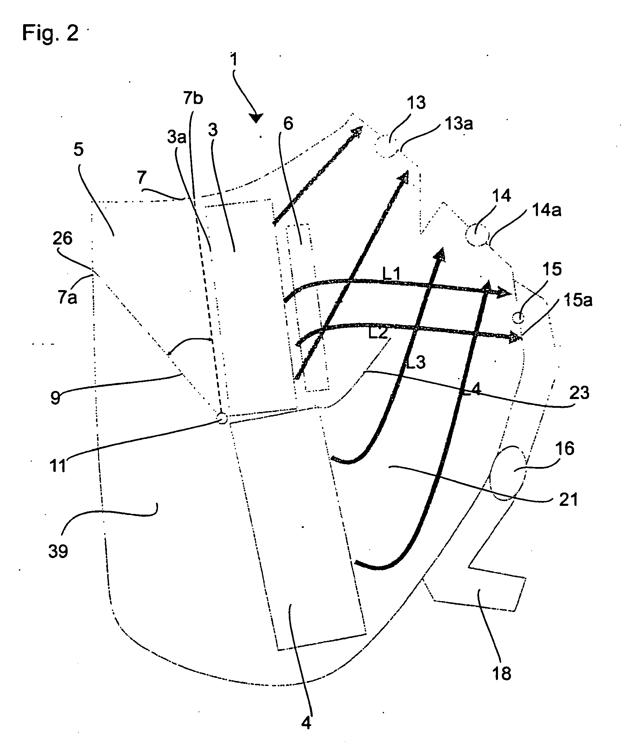

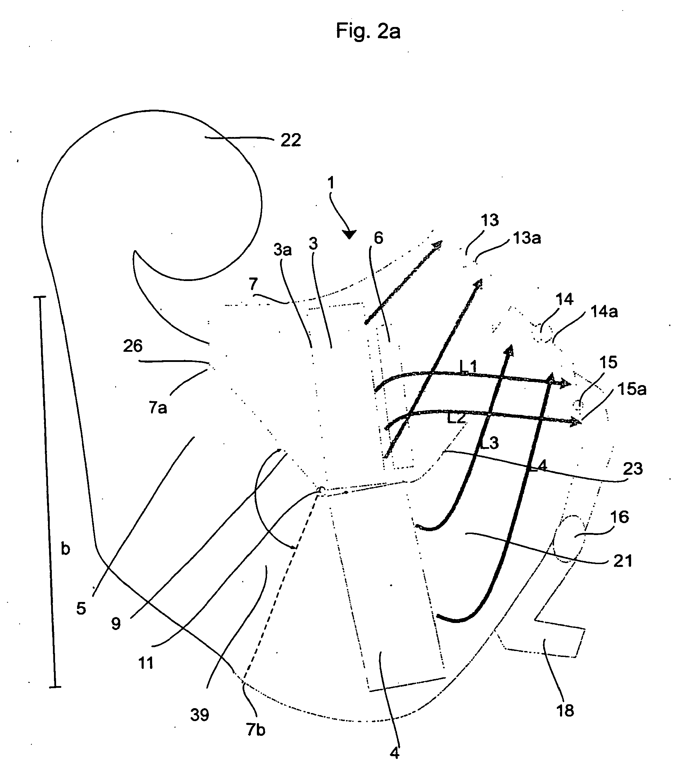

In Fig. 2 ist eine Seitenansicht einer erfindungsgemäßen Bauanordnung in einer ersten Ausführungsform gezeigt. Hier tritt die Luft durch einen (nicht gezeigten) Einlass in den Bereich 5 der Bauanordnung ein. In der in Fig. 2 gezeigten Darstellung legt sich ein Endabschnitt 26 einer ersten Regeleinrichtung 9 an einen Wandabschnitt 7a des Gehäuses 7 an. Dabei erstreckt sich die erste Regeleinrichtung bevorzugt genauso wie die erste Einrichtung 3 und die zweite Einrichtung 4 zum Austausch von Wärme in einer Richtung senkrecht zur Blattebene. Auf diese Weise wird verhindert, dass Luft in Richtung des Verdampfers gelangen kann und statt dessen die Luft ausschließlich in Richtung der Heizeinrichtung geleitet wird. Auf diese Weise wird die Luft aufgewärmt, gelangt anschließend durch ein PTC-Element 6 und wird aus dem Heiz- und/oder Klimatisierungssystem durch einen der Auslässe 13, 14, 16 oder 18 geleitet. Das Bezugszeichen 11 kennzeichnet einen Punkt bzw. ein Gelenk, an dem die erste Regeleinrichtung, das heißt die Luftklappe 9, angelenkt ist und auf diese Weise in Richtung des Pfeils P gedreht werden kann.

In einer zweiten, durch die gestrichelte Luftklappe angezeigten Position legt sich die erste Regeleinrichtung an die Einrichtung 3 zum Austausch von Wärme an. Dabei wird bevorzugt die komplette Oberfläche 3a der Einrichtung 3 zum Austausch von Wärme bedeckt. Unter einem Anliegen wird dabei verstanden, dass die Regeleinrichtung nicht notwendigerweise die Einrichtung vom Auslass von Wärme berühren muss, sondern auch, wie in Fig. 2 gezeigt, im Wesentlichen parallel zu dieser verläuft. In einer speziellen Ausführungsform kann die erste Regeleinrichtung auch tatsächlich die Einrichtung 3 zum Austausch von Wärme berühren. Durch das Anliegen muss zumindest erreicht werden, dass die Anteile der durch die entsprechende Einrichtung tretenden Luft reduziert werden.

Daneben kann in einer weiteren Ausführungsform die erste Regeleinrichtung auch an einem Abschnitt 7b am oberen Rand des Gehäuses anliegen, oder an einer zusätzlich im Inneren des Gehäuses nach innen gerichteten Wand (nicht gezeigt).

Dem Fachmann werden sich weitere mögliche Anordnungen der ersten Regeleinrichtung 9 erschließen, entscheidend ist, wie angeführt, dass ein durch die Einrichtung 3 zum Austausch von Wärme führender Luftstrom im wesentlichen verhindert wird. In diesem Fall wird die Luftströmung in Richtung der zweiten Einrichtung 4 zum Austausch von Wärme gelenkt und durchströmt diese. Nachdem die Luft im Verdampfer gekühlt und bevorzugt getrocknet wurde, wird sie in Richtung der Auslässe geleitet.

In einer Position zwischen den in Fig. 2 gezeigten Extremstellungen der erster Regeleinrichtung 9 werden Filteranteile der Luft durch die Heizeinrichtung bzw. die erste Einrichtung 3 zum Austausch von Wärme geleitet und andere Anteile durch die zweite Einrichtung 4 zum Austausch von Wärme, das heißt in dieser Ausführungsform, den Verdampfer. Nach dem Durchströmen der beiden Einrichtungen 3, 4 zum Austausch von Wärme findet im Raum 21, der in Strömungsrichtung der Luft nach den Einrichtungen zum Austausch von Wärme angeordnet ist, eine Mischung der einzelnen Luftanteile statt, so dass sich im Ergebnis eine Mischtemperatur der austretenden Luft einstellt. Bevorzugt sind in den Auslässen 13, 14, 16 und 18 zweite Regeleinrichtungen 13a, 14a und 16a angeordnet, die die Menge der durch diese Auslässe hindurchtretenden Luft steuern oder regeln.

Der Auslass 13 kennzeichnet einen Defrost- bzw. Enteisungs-Auslass zum Entfrosten der Windschutzscheibe. Das Bezugszeichen 14 kennzeichnet einen Auslass, durch welchen die Luft in den Frontbereich des Kraftfahrzeuginnenraums geleitet wird. Das Bezugszeichen 16 kennzeichnet einen Auslass für die Füße im Kraftfahrzeug-Frontbereich und Bezugszeichen 18 einen Auslass für den rückwärtigen Fußbereich. Dieser rückwärtige Bereich ist in dieser Ausführungsform nicht mit einer ersten Regeleinrichtung versehen.

Dabei werden bei dieser Ausführungsform Regeleinrichtungen, bevorzugt die einzelnen zweiten Regeleinrichtungen (13a, 14a, 16a) relativ hochliegend angesetzt, um im Falle einer Zwischenstellung der ersten Regeleinrichtung 9 eine möglichst günstige Vermischung der einzelnen Luftanteile zu erreichen. Dies ist durch die sich kreuzenden Teile L1 und L2 einerseits und L3 und L4 andererseits dargestellt. Eine Trenneinrichtung bzw. Trennwand 23 innerhalb des zweiten Raumes 21 verhindert, dass die erwärmte Luft in den unteren Bereich des Raumes 21 gelangt.

In Fig. 2a ist eine weitere Ausführungsform der erfindungsgemäßen Vorrichtung zum Austausch von Wärme dargestellt. Von dem Lüfter 23 beschleunigt, tritt die Luft über den Einlass 5 in das Gehäuse 7 der Vorrichtung zum Austausch von Wärme ein. Dabei kann sich die Breite des Einlasses 5 im wesentlichen über die gesamte Breite b der Rückwand 40 der Vorrichtung oder auch nur über einen beliebig großen Abschnitt der Rückwand erstrekken.

Die Regeleinrichtung 9 kann bei dieser Ausführungsform zwischen einer Stellung, in der sie an dem Gehäuseabschnitt 7a anliegt und einer Stellung in der sie an dem Gehäuseabschnitt 7b anliegt, bewegt werden. Auf diese Weise können auch bei dieser Ausführungsform die Anteile, die zu den jeweiligen Einrichtungen 3,4 zum Austausch von Wärme gelangen, geregelt werden.

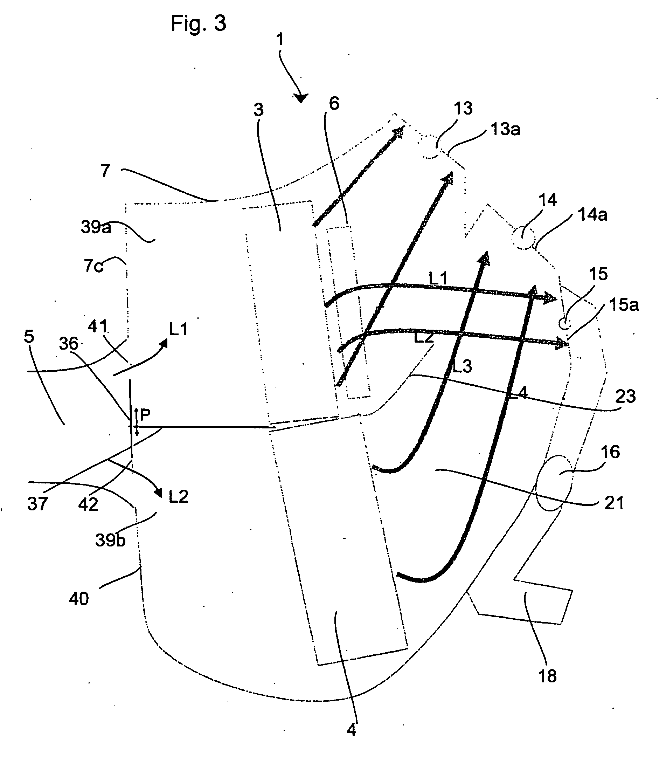

In Fig. 3 ist eine weitere Ausführungsform der erfindungsgemäßen Bauanordnung für eine Einrichtung zum Austausch von Wärme gezeigt. In diesem Fall gelangt die Luft über einen Einlass 5 in das Gehäuse 7 der Bauanordnung. Die Breite dieses Einlasses 5 kann auch bei dieser Ausführungsform so gewählt werden, dass sich der Einlass 5 im wesentlichen entlang der gesamten Wand 40 des Gehäuses erstreckt, oder nur entlang eines vorgegebenen Abschnitts, wie in Fig. 3 gezeigt.

Das Bezugszeichen 6 kennzeichnet einen Schieberegler 36, der in Richtung des Pfeils P entlang des Abschnitts 7b der Gehäusewand verschoben werden kann. Das Bezugszeichen 37 kennzeichnet eine im Inneren des Gehäuses 7 angeordnete Trennwand, die den in Strömungsrichtung der Luft vor den Einrichtungen 3 und 4 zum Austausch von Wärme liegenden Raum in zwei Teilräume 39a und 39b im Wesentlichen abdichtend bzw. luftdicht unterteilt. Die Bezugszeichen 41 und 42 kennzeichnen zwei Öffnungen im Gehäuse 7, wobei die Öffnung 41 in den Raum 39a und die Öffnung 42 in den Raum 39b führt.

Wenn der Schieberegler 36 in Fig. 3 in seiner obersten Stellung ist, wird im wesentlichen die Öffnung 41 vollständig blockiert und die eintretende Luft gelangt vollständig in den Raum 39b und damit im Wesentlichen vollständig durch die Einrichtung 4 zum Austausch von Wärme; befindet sich der Regler 36 in seiner untersten Stellung, wird umgekehrt die Öffnung 42 vollständig blockiert und die Luft gelangt ausschließlich in den Raum 39a und damit im Wesentlichen vollständig durch die Einrichtung 3 zum Austausch von Wärme. In zwischen diesen Extremen liegenden Stellungen gelangt Luft sowohl in den Teilraum 39a als auch in den Teilraum 39b, so dass, ähnlich wie bereits oben beschrieben, eine sich ergebende Mischtemperatur eingestellt werden kann.

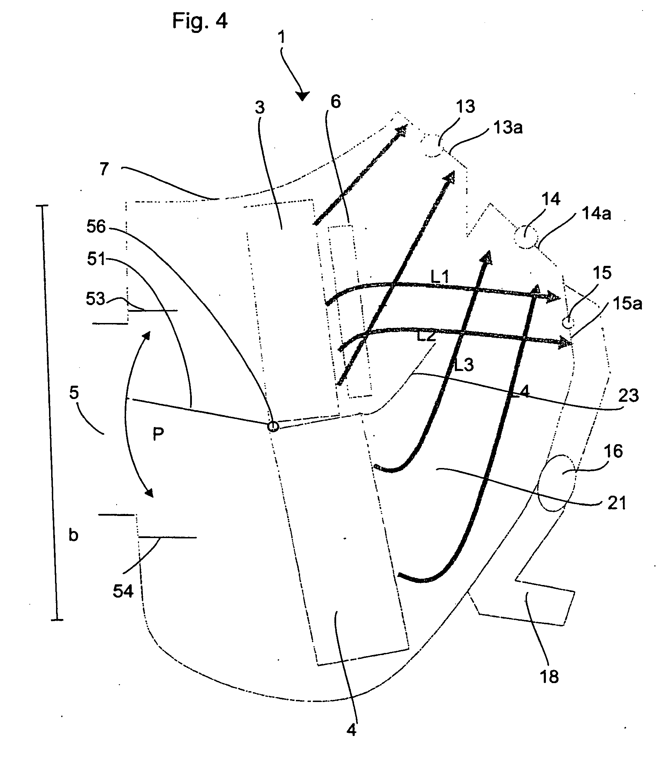

In Fig. 4 ist eine weitere Ausführungsform der erfindungsgemäßen Bauanordnung dargestellt. In diesem Fall ist eine erste Regeleinrichtung 51 vorgesehen, die um einen Anlenkungspunkt 56 in Richtung des Pfeils P bewegt werden kann. In einer Extremstellung liegt dabei die erste Regeleinrichtung 51 an einer Wand 53 im Inneren des Gehäuses an und in einer weiteren Extremstellung an einer Wand 54. Falls die erste Regeleinrichtung 51 an der Wand 54 anliegt, kann die durch den Einlass 5 oder 7 eintretende Luft nur den Strömungsweg über die erste Einrichtung 3 zum Austausch von Wärme nehmen. Liegt umgekehrt die erste Regeleinrichtung 51 an der Wand 53 an, so strömt die Luft vollständig durch die zweite Einrichtung 4 zum Austausch von Wärme. Zwischen diesen beiden Extremstellungen der ersten Regeleinrichtung 51 wird die Luft auf die Teilräume 39a und 38b verteilt, wobei die Anteile von der jeweiligen Position der ersten Regeleinrichtung 51 abhängen. Auch in dieser Ausführungsform kann die Breite des Einlasses unterschiedlich dimensioniert werden.

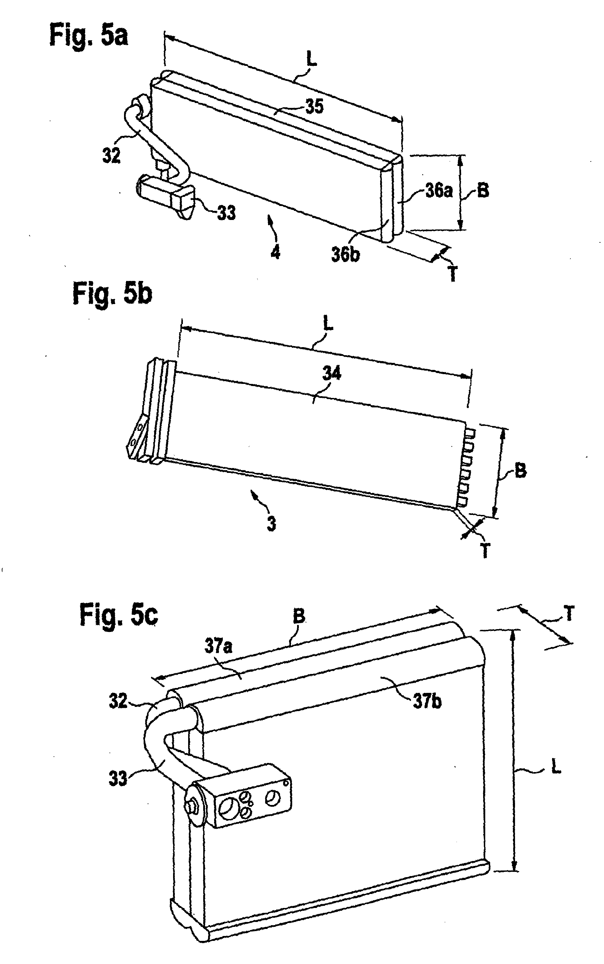

In Fig. 5a ist eine Einrichtung 4 zum Austausch von Wärme für eine erfindungsgemäße Bauanordnung dargestellt.

In Fig. 5 c ist eine Einrichtung zum Austausch von Wärme nach dem Stand der Technik dargestellt. Man erkennt, dass im Falle der Einrichtung 4 zum Austausch von Wärme für die erfindungsgemäße Bauanordnung die Breite der Einrichtung gegenüber der Länge im Vergleich zum Stand der Technik erheblich reduziert ist. Auch die in Fig. 5b gezeigte zweite Einrichtung 3 zum Austausch von Wärme weist eine gegenüber der Länge L deutlich reduzierte Breite auf. Durch diese Ausgestaltung wird die beschriebene Übereinanderanordnung der beiden Einrichtungen zum Austausch von Wärme erleichtert.

Das Bezugszeichen 35 kennzeichnet eine Vielzahl von Durchflusseinrichtungen bzw. Durchflussrohren, durch welche ein Kältemittel strömen kann. Dieses Kältemittel wird durch Zu- bzw. Abflüsse 32, 33 der Vorrichtung zugeführt bzw. aus dieser abgeleitet. Die Bezugszeichen 36a und 36b beziehen sich auf Sammel- und/oder Verteilrohre, welche an den Enden der Durchflussrohre 35 vorgesehen sind.

Die Einrichtung 4 der erfindungsgemäßen Bauanordnung weist eine Länge zwischen 200 mm und 900 mm, bevorzugt zwischen 300 mm und 800 mm und besonders bevorzugt zwischen 400 mm und 600 mm auf. Die Breite B der Einrichtung 3 liegt zwischen 60 mm und 250 mm, bevorzugt zwischen 80 mm und 180 mm und besonders bevorzugt zwischen 100 mm und 140 mm. Der Wirkungsquerschnitt der Einrichtung liegt zwischen 2 dm² und 9 dm², bevorzugt zwischen 3 dm² und 7² und besonders bevorzugt zwischen 5 dm² und 6 dm².

Die Tiefe der Einrichtung 4 liegt zwischen 20 mm und 120 mm, bevorzugt zwischen 40 mm und 90 mm und besonders bevorzugt zwischen 60 mm und 70 mm.

In Fig. 5b ist eine erste Einrichtung 3 zum Austausch von Wärme dargestellt. Die Länge L dieser Vorrichtung liegt zwischen 200 mm und 800 mm, bevorzugt zwischen 300 mm und 600 mm und besonders bevorzugt zwischen 350 mm und 450 mm.

Die Breite B dieser ersten Einrichtung 3 liegt zwischen 50 mm und 200 mm, bevorzugt zwischen 70 mm und 150 mm und besonders bevorzugt zwischen 100 mm und 130 mm.

Der Wirkungsquerschnitt der ersten Einrichtung 3 zum Austausch von Wärme liegt zwischen 2 dm² und 9 dm², bevorzugt zwischen 3 dm² und 8 dm² und besonders bevorzugt zwischen 4 dm² und 5 dm².

Wie oben ausgeführt, zeigt Fig. 5c eine Einrichtung zum Austausch von Wärme nach den Stand der Technik. Dabei ist bei dieser Einrichtung die Breite B gegenüber der Länge L stark erhöht, das heißt der Querschnitt ist stärker als im Falle der in Fig. 5a und 5b gezeigten Einrichtungen an die geometrische Form eines Quadrats angenähert.

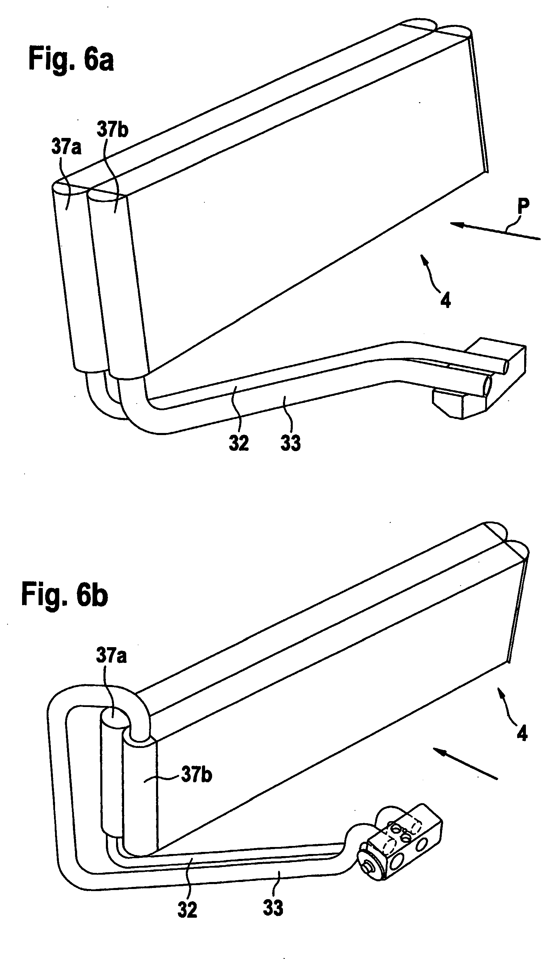

In Fig. 6a ist eine weitere Ausführungsform einer Einrichtung (4) zum Austausch von Wärme dargestellt. Dabei bezeichnet der Pfeil P die Strömungsrichtung der auf diese Einrichtung auftreffenden Luft. Im Gegensatz zu der in Fig. 5a gezeigten Einrichtung sind hier die Zu- und Abflussrohre 32 und 33 beide am Ende der Sammel- und/oder Verteilrohre 37a und 37b angeordnet.

Fig. 6b zeigt eine weitere Ausführungsform einer ersten Einrichtung zum Austausch von Wärme. Dabei sind in diesem Fall die Zu- und Abflussrohre 32 und 33 bezüglich der Sammel- und Verteilrohre 37a und 37b an den jeweils entgegengesetzten Enden angeordnet.

Die Anordnung der Zu- und Abflussrohre kann dabei an die räumlichen Gegebenheiten innerhalb der Bauanordnung angepasst werden.

## Patentansprüche

1. Bauanordnung für eine Vorrichtung zum Austausch von Wärme, mit wenigstens einem Gehäuse (7), in welchem ein gasförmiges Medium wenigstens teilweise auf einem vorbestimmten Pfad geführt wird, einer Einlasseinrichtung (23) für das gasförmige Medium, wenigstens einer ersten Einrichtung (3) zum Austausch von Wärme, wenigstens einer zweiten Einrichtung (4) zum Austausch von Wärme, wenigstens einer ersten Regeleinrichtung (9), die die Strömungsrichtung des gasförmigen Mediums wenigstens abschnittsweise beeinflusst und welche in wenigstens zwei unterschiedliche Stellungen eingestellt werden kann sowie einer Auslasseinrichtung (13, 14, 15, 16, 18) für das gasförmige Medium, wobei die erste Regeleinrichtung (9) in einem ersten Teilraum (39) des Gehäuses (7) untergebracht ist, wobei der erste Teilraum (39) des Gehäuses in Strömungsrichtung des gasförmigen Mediums vor der ersten (3) und zweiten (4) Einrichtung zum Austausch von Wärme angeordnet ist, wobei in wenigstens einer ersten Stellung der ersten Regeleinrichtung (9) im Wesentlichen keine Anteile des gasförmigen Mediums durch die erste Einrichtung (3) zum Austausch von Wärme und in wenigstens einer zweiten Stellung der ersten Regeleinrichtung (9) im Wesentlichen keine Anteile des gasförmigen Mediums durch die zweite Einrichtung (4) zum Austausch von Wärme geführt werden, wobei die erste Einrichtung (3) und die zweite Einrichtung (4) zum Austausch von Wärme räumlich im Wesentlichen übereinander angeordnet sind, wobei die erste Einrichtung (3) zum Austausch von Wärme über der zweiten Einrichtung (4) zum Austausch von Wärme angeordnet ist
**dadurch gekennzeichnet,**
**dass** die erste Einrichtung (3) und die zweite Einrichtung (4) zum Austausch von Wärme im Wesentlichen parallel zueinander angeordnet sind.

2. Bauanordnung, nach Anspruch 1,
**dadurch gekennzeichnet,**
**dass** die erste Regeleinrichtung (9) zwischen der ersten Stellung und der zweiten Stellung bevorzugt stufenlos einstellbar ist.

3. Bauanordnung, nach wenigstens einem der vorangegangenen Ansprüche,
**dadurch gekennzeichnet,**
**dass** wenigstens ein Abschnitt der ersten Regeleinrichtung (9) in wenigstens einer Stellung an wenigstens einem Abschnitt der ersten Einrichtung (3) zum Austausch von Wärme anliegt und bevorzugt mit wenigstens einem Abschnitt (26) des Gehäuses (7) in Kontakt steht.

4. Bauanordnung, nach wenigstens einem der vorangegangenen Ansprüche,
**dadurch gekennzeichnet,**
**dass** wenigstens ein Abschnitt der ersten Regeleinrichtung (9) in wenigstens einer Stellung an wenigstens einem Abschnitt (26) des Gehäuses anliegt, bevorzugt mit wenigstens einem Abschnitt (26) des Gehäuses (7) in Kontakt steht.

5. Bauanordnung, nach wenigstens einem der vorangegangenen Ansprüche,
**dadurch gekennzeichnet,**
**dass** ein zweiter Teilraum (21) des Gehäuses (7) vorgesehen ist, der in Strömungsrichtung des gasförmigen Mediums nach der ersten (3) und zweiten (4) Einrichtung zum Austausch von Wärme angeordnet ist.

6. Bauanordnung, nach wenigstens einem der vorangegangenen Ansprüche,
**dadurch gekennzeichnet,**
**dass** in dem zweiten Teilraum (21) wenigstens eine teilweise Durchmischung des durch die erste (3) und die zweite (4) Einrichtung zum Austausch von Wärme hindurchtretenden gasförmigen Mediums stattfindet.

7. Bauanordnung, nach wenigstens einem der vorangegangenen Ansprüche,
**dadurch gekennzeichnet,**
**dass** in den zweiten Teilraum (21) wenigstens eine Lenkeinrichtung (43) für das gasförmige Medium vorgesehen ist.

8. Bauanordnung, nach wenigstens einem der vorangegangenen Ansprüche,
**dadurch gekennzeichnet,**
**dass** wenigstens eine Einrichtung (3, 4) zum Austausch von Wärme eine vorgegebene Länge und einer dieser Länge gegenüber erheblich verminderte Breite und Tiefe aufweist.

9. Bauanordnung, nach wenigstens einem der vorangegangenen Ansprüche,
**dadurch gekennzeichnet,**
**dass** eine dritte Einrichtung (6) zum Austausch von Wärme vorgesehen ist.

10. Bauanordnung, nach wenigstens einem der vorangegangenen Ansprüche,
**dadurch gekennzeichnet,**
**dass** wenigstens eine Einrichtung zum Austausch von Wärme eine Vielzahl von Durchflusseinrichtungen für ein Kältemittel aufweist.

11. Bauanordnung, nach wenigstens einem der vorangegangenen Ansprüche,
**dadurch gekennzeichnet,**
**dass** die Durchflusseinrichtungen eine Länge aufweisen, die zwischen 200 mm und 900 mm, bevorzugt zwischen 300 mm und 800 mm und besonders bevorzugt zwischen 400 mm und 600 mm liegen.

12. Bauanordnung, nach wenigstens einem der vorangegangenen Ansprüche,
**dadurch gekennzeichnet,**
**dass** die dritte Einrichtung (6) zum Austausch von Wärme eine Heizeinrichtung ist, die aus einer Gruppe von Heizeinrichtungen ausgewählt ist, die CO₂-Wärmepumpen, Abgaswärme nutzende Heizungen, Brennstoffheizungen, Standheizungen, elektrische Heizungen und dergleichen enthält.

13. Bauanordnung, nach wenigstens einem der vorangegangenen Ansprüche,
**dadurch gekennzeichnet,**
**dass** die dritte Einrichtung (6) zum Austausch von Wärme eine gegenüber derjenigen der ersten Einrichtung (3) zum Austausch von Wärme verminderte Querschnittsfläche aufweist.

14. Bauanordnung, nach wenigstens einem der vorangegangenen Ansprüche,
**dadurch gekennzeichnet,**
**dass** die erste Einrichtung (3) zum Austausch von Wärme eine Heizeinrichtung ist.

15. Bauanordnung, nach wenigstens einem der vorangegangenen Ansprüche,
**dadurch gekennzeichnet,**
**dass** die dritte Einrichtung (6) zum Austausch von Wärme in Strömungsrichtung des gasförmigen Mediums hinter der ersten Einrichtung (3) zum Austausch von Wärme angeordnet ist.

16. Bauanordnung, nach wenigstens einem der vorangegangenen Ansprüche,
**dadurch gekennzeichnet,**
**dass** eine Vielzahl von Auslasseinrichtungen (13, 14, 15, 16, 18) für das gasförmige Medium vorgesehen sind.

17. Bauanordnung, nach wenigstens einem der vorangegangenen Ansprüche,
**dadurch gekennzeichnet,**
**dass** wenigstens eine Auslasseinrichtung einen im wesentlichen rechteckigen Querschnitt aufweist.

18. Bauanordnung, nach wenigstens einem der vorangegangenen Ansprüche,
**dadurch gekennzeichnet,**
**dass** wenigstens eine Auslasseinrichtung eine zweite Regeleinrichtung (13a) für das austretende gasförmige Medium aufweist.

19. Bauanordnung, nach wenigstens einem der vorangegangenen Ansprüche,
**dadurch gekennzeichnet,**
**dass** die Bauanordnung ferner eine Gebläseeinrichtung aufweist.

## Claims

1. A construction for a heat exchanging device having at least one housing (7) through which a gaseous medium is conducted on an at least partially predetermined path, an inlet device (23) for the gaseous medium, at least one first heat exchanging device (3), at least one second heat exchanging device (4), at least one first regulating device (9) which influences the flow direction of the gaseous medium in certain sections at least and which can be set to at least two different positions, and an outlet device (13, 14, 15, 16, 18) for the gaseous medium, the first regulating device (9) being accommodated in a first section (39) of the housing (7), said first section (39) of the housing being positioned upstream of the first (3) and second (4) heat exchanging devices when viewed in the direction of flow, essentially none of the gaseous medium being conducted through the first heat exchanging device (3) in at least one first position of the first regulating device (9), and essentially none of the gaseous medium being conducted through the second heat exchanging device (4) in at least one second position of the first regulating device (9), the first heat exchanging device (3) and the second heat exchanging device (4) being positioned essentially spatially one above the other, the first heat exchanging device (3) being positioned above the second heat exchanging device (4),
**characterised in that**
the first heat exchanging device (3) and the second heat exchanging device (4) are positioned essentially parallel to one another.

2. A construction in accordance with claim 1,
**characterised in that**
the first regulating device (9) can be adjusted preferably continuously between the first position and the second position.

3. A construction in accordance with at least one of the preceding claims,
**characterised in that**
in at least one position at least one section of the first regulating device (9) is adjacent to at least one section of the first heat exchanging device (3) and is preferably in contact with at least one section (26) of the housing (7).

4. A construction in accordance with at least one of the preceding claims,
**characterised in that**
in at least one position at least one section of the first regulating device (9) is adjacent to at least one section (26) of the housing (7) and is preferably in contact with at least one section (26) of the housing (7).

5. A construction in accordance with at least one of the preceding claims,
**characterised in that**
there is provided a second section (21) of the housing (7) which is positioned downstream of the first (3) and second (4) heat exchanging devices when viewed in the direction of flow of the gaseous medium.

6. A construction in accordance with at least one of the preceding claims,
**characterised in that**
the gaseous medium which passes through the first (3) and second (4) heat exchanging devices is at least partially mixed in the second section (21).

7. A construction in accordance with at least one of the preceding claims,
**characterised in that**
at least one diverting device (43) for the gaseous medium is provided in the second section (21).

8. A construction in accordance with at least one of the preceding claims,
**characterised in that**
at least one heat exchanging device (3, 4) is of a predetermined length and of a width and depth which are significantly smaller than said length.

9. A construction in accordance with at least one of the preceding claims,
**characterised in that**
a third heat exchanging device (6) is provided.

10. A construction in accordance with at least one of the preceding claims,
**characterised in that**
at least one heat exchanging device has a plurality of flow devices for a coolant.

11. A construction in accordance with at least one of the preceding claims,
**characterised in that**
the flow devices are of a length between 200 mm and 900 mm, preferably between 300 and 800 mm, and particularly preferably between 400 mm and 600 mm.

12. A construction in accordance with at least one of the preceding claims,
**characterised in that**
the third heat exchanging medium (6) is a heating device selected from a group of heating devices including CO₂ heat pumps, heating devices which use waste gas heat, heating devices which use fuels, auxiliary heating devices, electrical heating devices and other similar devices.

13. A construction in accordance with at least one of the preceding claims,
**characterised in that**
the third heat exchanging medium (6) has a smaller cross-sectional surface than the first heat exchanging device (3).

14. A construction in accordance with at least one of the preceding claims,
**characterised in that**
the first heat exchanging device (3) is a heating device.

15. A construction in accordance with at least one of the preceding claims,
**characterised in that**
the third heat exchanging device (6) is positioned downstream of the first heat exchanging device (3) when viewed in the direction of flow of the gaseous medium.

16. A construction in accordance with at least one of the preceding claims,
**characterised in that**
a plurality of outlet devices (13, 14, 15, 16, 18) is provided for the gaseous medium.

17. A construction in accordance with at least one of the preceding claims,
**characterised in that**
at least one outlet device has an essentially rectangular cross section.

18. A construction in accordance with at least one of the preceding claims,
**characterised in that**
at least one outlet device has a second regulating device (13a) for the emerging gaseous medium.

19. A construction in accordance with at least one of the preceding claims,
**characterised in that**
the construction also has a fan device.

## Revendications

1. Construction pour un dispositif d'échange de chaleur, avec au moins un boîtier (7), dans lequel un fluide gazeux est guidé au moins en partie sur un chemin prédéterminé, un dispositif d'admission (23) pour le fluide gazeux, au moins un premier dispositif (3) pour l'échange de chaleur, au moins un deuxième dispositif (4) pour l'échange de chaleur, au moins un premier dispositif de régulation (9), influant, au moins par tronçons, sur le sens d'écoulement du fluide gazeux et qui peut être réglé en au moins deux positions différentes, ainsi qu'un dispositif d'échappement (13, 14, 15, 16, 18) pour le fluide gazeux, le premier dispositif de régulation (9) étant logé dans un premier espace partiel (39) du boîtier (7), le premier espace partiel (39) du boîtier étant disposé en amont du premier (3) et du deuxième (4) dispositif d'échange de chaleur en observant dans la direction d'écoulement du fluide gazeux, sachant que, en au moins une première position du premier dispositif de régulation (9), pratiquement aucune partie du fluide gazeux n'est guidée à travers le premier dispositif (3) pour échanger de la chaleur et que, en au moins une deuxième position du premier dispositif de régulation (9), pratiquement aucune partie du fluide gazeux n'est guidée à travers le deuxième dispositif (4) pour échanger de la chaleur, sachant que le premier dispositif (3) et le deuxième dispositif (4) d'échange de chaleur sont disposés spatialement sensiblement l'un au-dessus de l'autre, sachant que le premier dispositif (3) pour échanger de la chaleur est disposé au-dessus du deuxième dispositif (4) pour échanger de la chaleur,
**caractérisée en ce que**
le premier dispositif (3) et le deuxième dispositif (4) pour échanger de la chaleur sont disposés sensiblement parallèlement l'un à l'autre.

2. Construction selon la revendication 1,
**caractérisée en ce que**
le premier dispositif de régulation (9) est réglable, de préférence de façon progressive et continue, entre la première position et la deuxième position.

3. Construction selon au moins l'une des revendications précédentes,
**caractérisée en ce qu'**
au moins un tronçon du premier dispositif de régulation (9) est appliqué, en au moins une première position, à au moins un tronçon du premier dispositif (3) pour échanger de la chaleur et, de préférence, est en contact avec au moins un tronçon (26) du boîtier (7).

4. Construction selon au moins l'une des revendications précédentes,
**caractérisée en ce qu'**
au moins un tronçon du premier dispositif de régulation (9) est appliqué, en au moins une position, sur au moins un tronçon (26) du boîtier, de préférence est en contact avec au moins un tronçon (26) du boîtier (7).

5. Construction selon au moins l'une des revendications précédentes,
**caractérisée en ce qu'**
un deuxième espace partiel (21) du boîtier (7) est prévu, disposé en aval du premier (3) et du deuxième (4) dispositifs pour échanger de la chaleur en observant dans le sens d'écoulement du fluide gazeux.

6. Construction selon au moins l'une des revendications précédentes,
**caractérisée en ce que**
dans le deuxième espace partiel (21) s'effectue au moins un mélange partiel du fluide gazeux passant par le premier (3) et le deuxième (4) dispositifs pour échanger de la chaleur.

7. Construction selon au moins l'une des revendications précédentes,
**caractérisée en ce que**,
dans le deuxième espace partiel (21), est prévu au moins un dispositif de guidage (43) pour le fluide gazeux.

8. Construction selon au moins l'une des revendications précédentes,
**caractérisée en ce qu'**
au moins un dispositif (3, 4) pour échanger de la chaleur présente une longueur prédéterminée et une largeur et une profondeur notablement diminuées par rapport à cette longueur.

9. Construction selon au moins l'une des revendications précédentes,
**caractérisée en ce qu'**
un troisième dispositif (6) pour échanger de la chaleur est prévu.

10. Construction selon au moins l'une des revendications précédentes,
**caractérisée en ce qu'**
un dispositif pour échanger de la chaleur présente une pluralité de dispositifs de passage pour un fluide frigorigène.

11. Construction selon au moins l'une des revendications précédentes,
**caractérisée en ce que**
les dispositifs de passage présentent une longueur, comprise dans la fourchette entre 200 mm et 900 mm, de préférence entre 300 mm et 800 mm et, de façon particulièrement préférée, entre 400 mm et 600 mm.

12. Construction selon au moins l'une des revendications précédentes,
**caractérisée en ce que**
le troisième dispositif (6) pour échanger de la chaleur est un dispositif de chauffage, sélectionné parmi un groupe de dispositifs de chauffage contenant des pompes à chaleur à CO₂, des chauffages utilisant la chaleur des gaz d'échappement, des chauffages fonctionnant sur carburant, des chauffages stationnaires, des chauffages électriques, et analogues.

13. Construction selon au moins l'une des revendications précédentes,
**caractérisée en ce que**
le troisième dispositif (6) pour échanger de la chaleur présente une surface de section transversale diminuée par rapport à celle du premier dispositif (3) pour échanger de la chaleur.

14. Construction selon au moins l'une des revendications précédentes,
**caractérisée en ce que**
le premier dispositif (3) pour échanger de la chaleur est un dispositif de chauffage.

15. Construction selon au moins l'une des revendications précédentes,
**caractérisée en ce que**
le troisième dispositif (6) pour échanger de la chaleur est disposé en aval du premier dispositif (3) pour échanger de la chaleur, en observant dans le sens d'écoulement du fluide gazeux.

16. Construction selon au moins l'une des revendications précédentes,
**caractérisée en ce qu'**
une pluralité de dispositifs d'échappement (13, 14, 15, 16, 18) sont prévus pour le fluide gazeux.

17. Construction selon au moins l'une des revendications précédentes,
**caractérisée en ce qu'**
au moins un dispositif d'échappement présente une section transversale sensiblement rectangulaire.

18. Construction selon au moins l'une des revendications précédentes,
**caractérisée en ce qu'**
au moins un dispositif d'échappement présente un deuxième dispositif de régulation (13a) pour le fluide gazeux sortant.

19. Construction selon au moins l'une des revendications précédentes,
**caractérisée en ce que**
la construction présente en outre un dispositif à soufflante.
